# EUROPEAN PATENT APPLICATION

(11) **EP 4 129 459 A1**
(43) Date of publication of application: **08.02.2023**
(21) Application number: 20933683.3
(22) Date of filing: 30.04.2020
(51) Int. Cl.: B01J 2/10, B01J 19/00

(54) **MULTI-PHASE INTERFACE REACTOR**

(71) Applicant: Lanzhou Lanshi Zhongke Nanotechnology Co., Ltd., Lanzhou, Gansu 730314 (CN)
(72) Inventor: YAO, He, Lanzhou, Gansu 730314 (CN); ZENG, Neng, Lanzhou, Gansu 730314 (CN); DING, Hongling, Lanzhou, Gansu 730314 (CN); HOU, Xiaogang, Lanzhou, Gansu 730314 (CN); SHI, Benyi, Lanzhou, Gansu 730314 (CN); LI, Jiancang, Lanzhou, Gansu 730314 (CN); YANG, Yaohua, Lanzhou, Gansu 730314 (CN)
(74) Representative: Wang, Bo
(86) International application number: PCT/CN2020/088001
(87) International publication number: WO 2021/217550

(57) **Abstract**

The present disclosure generally relates to a reactor, in particular to a multiphase interface reactor applicable to chemistry, chemical industry, food, medicine, cosmetics and other fields. The reactor comprises a reaction cylinder; at least one feed port opened in the reaction cylinder; a stirring device, at least a part of the stirring device being located inside the reaction cylinder; at least one cylinder including a first cylinder and a second cylinder, wherein, the reaction cylinder, the first cylinder, and the second cylinder communicate with each other; an annular space is formed between the reaction cylinder and the second cylinder, so that at least part of a reaction product is allowed to enter the annular space from the reaction cylinder, and enter the first cylinder from the annular space; and at least one discharge port arranged on the first cylinder.

## Description

### TECHNICAL FIELD

The present disclosure generally relates to a reactor, in particular to a multiphase interface reactor applicable to chemistry, chemical industry, food, medicine, cosmetics, and other fields.

### BACKGROUND

Nanoparticles have excellent performance and are widely used in multiple fields. For example, nanoparticles have novel physical and chemical characteristics, have advantages of larger specific surface, high surface energy, and high surface activity, and can be used as catalysts, additives, environmental protection treatment agents, etc. Therefore, it is necessary to provide a multiphase interface reactor to prepare nanoparticles to improve the preparation efficiency, purity, and uniformity and controllability of the nanoparticle size.

### SUMMARY

A purpose of the present disclosure is to provide a multiphase interface reactor to prepare nanoparticles with high purity, narrow particle size distribution, and uniform size.

One aspect of the present disclosure provides a multiphase interface reactor, comprising: a reaction cylinder; at least one feed port opened in the reaction cylinder; a stirring device, at least a part of the stirring device being located inside the reaction cylinder; at least one cylinder including a first cylinder and a second cylinder, wherein, the reaction cylinder, the first cylinder, and the second cylinder communicate with each other; an annular space is formed between the reaction cylinder and the second cylinder, so that at least part of a reaction product is allowed to enter the annular space from the reaction cylinder, and enter the first cylinder from the annular space; and at least one discharge port arranged on the first cylinder.

In some embodiments, the reaction cylinder communicates with the second cylinder through a lower bottom surface of the reaction cylinder; an inner surface of a cylinder wall of the second cylinder and an outer surface of a cylinder wall of the reaction cylinder form the annulus space; and the second cylinder communicates with the first cylinder through an upper surface of the second cylinder.

In some embodiments, a distance between the lower bottom surface of the reaction cylinder and a lower cylinder cover of the second cylinder is 40-80 mm.

In some embodiments, a distance between the lower bottom surface of the reaction cylinder and a lower cylinder cover of the second cylinder is 50-75 mm.

In some embodiments, a distance between the lower bottom surface of the reaction cylinder and a lower cylinder cover of the second cylinder is 54-69 mm.

In some embodiments, a height of the reaction cylinder is 70-120 mm.

In some embodiments, a height of the reaction cylinder is 90-100mm.

In some embodiments, a diameter of the first cylinder is 100-150 mm; and a height of the first cylinder is 80-120 mm.

In some embodiments, a diameter of the first cylinder is 110-140 mm; and a height of the first cylinder is 90-110 mm.

In some embodiments, a diameter of the first cylinder is 126 mm; and a height of the first cylinder is 99 mm.

In some embodiments, the stirring device includes: a first power component; at least one stirring sheet; and a transmission device, wherein the transmission device is configured to drive, based on driving of the first power component, the at least one stirring sheet to move.

In some embodiments, the stirring device further includes: a coupling device configured to connect the first power component and the transmission device.

In some embodiments, the at least one stirring sheet includes at least one stirring disk.

In some embodiments, a distance between an outer circumference of the at least one stirring disk and an inner surface of a cylinder wall of the reaction cylinder is 4-7 mm; and a distance from the at least one stirring disk to a lower bottom surface of the reaction cylinder is 70-90 mm.

In some embodiments, a distance between an outer circumference of the at least one stirring disk and an inner surface of a cylinder wall of the reaction cylinder is 5-6 mm; and a distance from the at least one stirring disk to a lower bottom surface of the reaction cylinder is 75-80 mm.

In some embodiments, a distance between an outer circumference of the at least one stirring disk and an inner surface of a cylinder wall of the reaction cylinder is 5.5 mm; and a distance between the at least one stirring disk and a lower bottom surface of the reaction cylinder is 78.5 mm.

In some embodiments, the at least one stirring disk includes: at least one bubble cap; and at least one opening having one-to-one correspondence to the at least one bubble cap, each of the at least one opening being located below the corresponding bubble cap.

In some embodiments, a count of the at least one bubble cap is 10.

In some embodiments, the at least one bubble cap includes a quarter hollow sphere.

In some embodiments, the reactor further comprises a dosing device, wherein the dosing device includes: at least one storage tank; at least one feed pipe configured to connect the at least one feed port and the at least one storage tank; and at least one second power component configured to provide power for transporting reactants from the at least one storage tank to the reaction cylinder.

In some embodiments, the dosing device further includes: a second control component configured to control a ratio and/or a feeding sequence of the reactants.

In some embodiments, the at least one storage tank includes: a dosing tank configured to pretreat at least part of the reactants and store the pretreated reactants.

In some embodiments, the at least one second power component includes a metering pump.

In some embodiments, a distance between the at least one second power component and the at least one storage tank is smaller than a distance between the at least one second power component and the reaction cylinder.

In some embodiments, the reactor further comprises a washing device, wherein the first cylinder is provided with at least one first cleaning port configured to connect the washing device; and/or the second cylinder is provided with at least one second cleaning port configured to connect the washing device.

In some embodiments, the washing device includes: a liquid supply module configured to supply a cleaning liquid; and a waste liquid collection module configured to collect a waste liquid.

In some embodiments, the liquid supply module includes: a storage tank configured to store the cleaning liquid; a liquid supply pipe configured to connect the storage tank with the at least one first cleaning port and/or the at least one second cleaning port; and a third power component configured to provide power to transport the cleaning liquid from the storage tank to the at least one first cleaning port and/or the at least one second cleaning port.

In some embodiments, the liquid supply module further includes a third control component configured to control a supply flow rate of the cleaning liquid.

In some embodiments, the waste liquid collection module includes: at least one waste liquid collection tank; and at least one waste liquid pipe configured to connect the at least one waste liquid collection tank and at least one waste liquid collection port, wherein the at least one waste liquid collection port is arranged on the second cylinder.

### BRIEF DESCRIPTION OF THE DRAWINGS

The present disclosure will be further described in the form of exemplary embodiments, which will be described in detail by the accompanying drawings. These embodiments are not restrictive. In these embodiments, the same number represents the same structure, wherein:
FIG. 1 is a schematic diagram of a local section structure of an exemplary multiphase interface reactor according to some embodiments in the present disclosure;
FIG. 2 is a schematic diagram of an overall section structure of an exemplary multiphase interface reactor according to some embodiments in the present disclosure;
FIG. 3 is a top structure diagram of section A-A of the multiphase interface reactor shown in FIG. 1;
FIG. 4A is a schematic diagram of an exemplary stirring disk according to some embodiments in the present disclosure;
FIG. 4B is a schematic diagram of an exemplary propelled stirring sheet according to some embodiments in the present disclosure;
FIG. 4C is a front view and a top view of an exemplary straight paddle- type stirring sheet according to some embodiments in the present disclosure;
FIG. 4D is a front view and a top view of an exemplary disk turbine stirring sheet according to some embodiments in the present disclosure;
FIG. 5 is a schematic diagram of a structure of another multiphase interface reactor according to some embodiments in the present disclosure;
FIG. 6 is a schematic diagram of a structure of an exemplary multiphase interface reactor according to some embodiments in the present disclosure;
FIG. 7 is a scanning electron microscope diagram of zinc oxide nanoparticles prepared according to some embodiments in the present disclosure;
FIG. 8 is a scanning electron microscope diagram of zinc oxide nanoparticles prepared according to some embodiments in the present disclosure;
FIG. 9 is a scanning electron microscope diagram of copper oxide nanoparticles prepared according to some embodiments in the present disclosure; and
FIG. 10 is a scanning electron microscope diagram of ferrous sulfate nanoparticles prepared according to some embodiments in the present disclosure.

In the figures, 100 is a reactor, 110 is a first cylinder, 111 is a discharge pipe, 112 is a sampling port, 120 is a second cylinder, 121 is a pH detection port, 130 is a reaction cylinder, 140 is a stirring device, 141 is a stirring disk, 142 is a bubble cap, 143 is a transmission device, 144 is an opening, 145 is a coupling device, 146 is a bearing bush, 147 is at least one propelled stirring sheet, 148 is at least one straight paddle- type stirring sheet, 149 is a disk turbine stirring sheet, 1491 is a horizontal disk, 1492 is at least one turbine stirring sheet, 1493 is a horizontal disk opening, 150 is a feed pipe, 151 is a storage tank, 152 is a second power component, 160 is a liquid supply pipeline, 161 is a storage tank, 162 is a third power component, 163 is a second cleaning port, 164 is a first cleaning port, 165 is a first traffic meter, 170 is a waste liquid collection port, 171 is a waste liquid pipeline, 172 is a waste liquid collection tank.

### DETAILED DESCRIPTION

In order to more clearly explain the technical scheme of the embodiments of the present disclosure, the following will briefly introduce the drawings that need to be used in the description of the embodiments. Obviously, the drawings in the following description are only some examples or embodiments of the present disclosure. For those skilled in the art, the present disclosure may also be applied to other similar scenarios according to these drawings without creative work. Unless it is obvious from the language environment or otherwise stated, the same label in the FIG. represents the same structure or operation.

As shown in the present application and claims, unless the context clearly indicates an exception, the words "a", "one", and/or "the" do not specifically refer to the singular, but can also include the plural. Generally speaking, the terms "including" and "including" only indicate that steps and elements that have been clearly identified are included, but these steps and elements do not constitute an exclusive list, and methods or equipment may also include other steps or elements.

Those skilled in the art can understand that the terms "first" and "second" in the present disclosure are only used to distinguish different devices, modules or parameters, and do not represent any specific technical meaning or the necessary logical order between them.

The present disclosure covers any substitution, modification, equivalent method and scheme defined by the claims on the essence and scope of the present disclosure. Further, in order to make the public have a better understanding of the present disclosure, some specific details are described in detail in the following detailed description of the present disclosure. It is possible for those skilled in the art to fully understand the present disclosure without the description of these details.

One aspect of the present disclosure provides a multiphase interface reactor. Through a special structure of a stirring device (for example, a stirring disk), a reactant may be dispersed into a bubble liquid film, the bubble may be a dispersed phase, and the liquid film may be a continuous phase, so as to form a nano reaction environment. After the reactant generates a reaction product in a reaction cylinder, nanoparticles with high purity, uniform size, narrow particle size distribution, and small particles may be obtained through annular discharge, separation, washing, drying, and/or roasting.

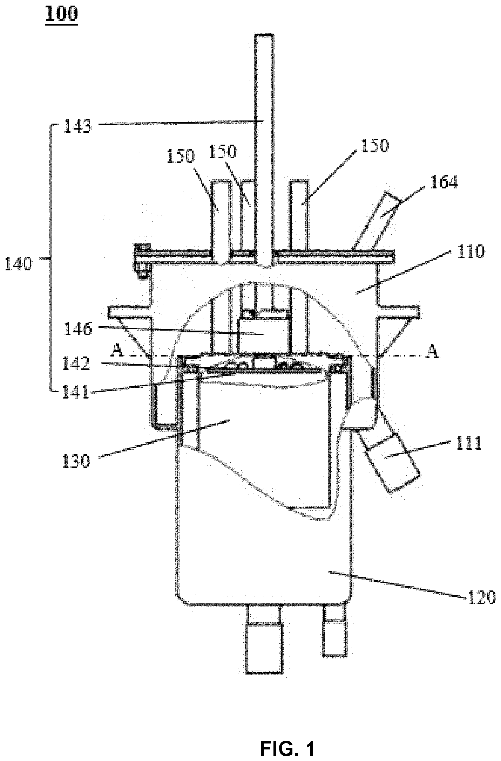

FIG. 1 is a schematic diagram of a local section structure of an exemplary multiphase interface reactor according to some embodiments in the present disclosure.

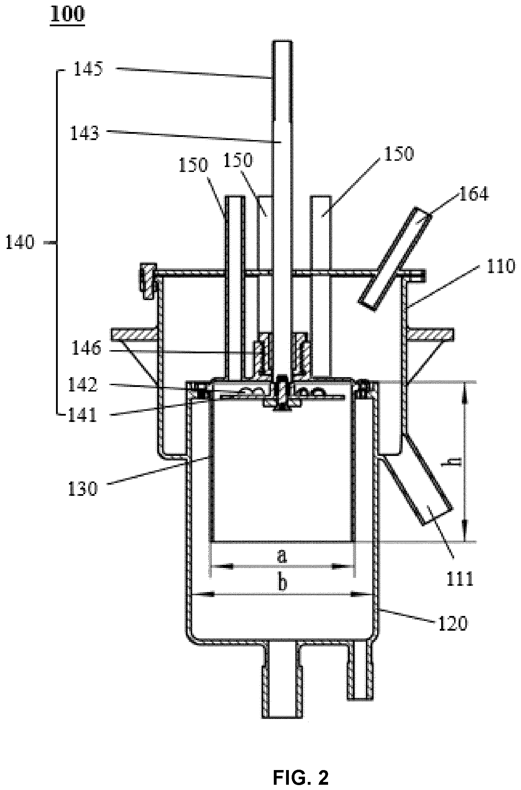

FIG. 2 is a schematic diagram of an overall section structure of an exemplary multiphase interface reactor according to some embodiments in the present disclosure.

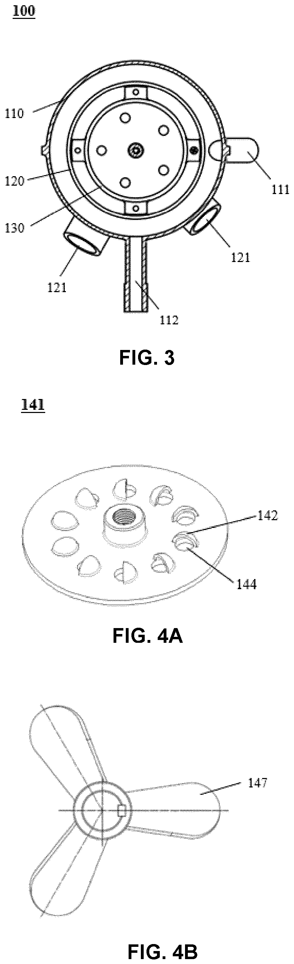

FIG. 3 is a top structure diagram of section A-A of the multiphase interface reactor shown in FIG. 1.

As shown in FIG. 1, a reactor 100 may include at least one feed port, a reaction cylinder 130, a stirring device 140, at least one cylinder, and at least one discharge port.

The at least one feed port may be opened in the reaction cylinder 130 to guide a reactant and a gas (which can also be collectively referred to as "a reactant" for convenience of description) into the reaction cylinder 130. A count of the at least one feed port may be determined according to types of the reactant and the gas required for a reaction.

At least a part of the stirring device 140 may be located in the reaction cylinder 130, configured to mix the reactant and the gas (which may be called "gas-liquid mixture" or collectively referred to as "a reactant") entering the reaction cylinder 130, so as to disperse the gas- liquid mixture into a bubble liquid film (in which the bubble may be a dispersed phase and the liquid film may be a continuous phase), so as to provide a reaction environment for nanoparticles.

The reaction cylinder 130 may provide a reaction site for nanoparticles, so that the reactant may react in the reaction cylinder 130 to generate a reaction product.

At least one cylinder may be connected with the reaction cylinder 130 to complete a termination of a nanoparticle reaction and form a uniform and stable reaction product (which may be called "mineralized foam"). Specifically, at least one cylinder may be connected with the reaction cylinder 130 to form an annulus space, so that at least part of the reaction product may enter the annulus space from the reaction cylinder 130, and then enter at least one cylinder from the annulus space. A count of the at least one cylinder may be set according to specific needs, and is not limited in the present disclosure. For example, the at least one cylinder may include a first cylinder 110 and a second cylinder 120. As used herein, the first cylinder 110 may be located at an upper part of the reactor 100 and the second cylinder 120 may be located at a lower part of the reactor 100. The first cylinder 110, the second cylinder 120, and the reaction cylinder 130 may be connected with each other. An annulus space may be formed between the reaction cylinder 130 and the second cylinder 120, and at least part of the reaction product may enter the annulus space from the reaction cylinder 130, and then enter the first cylinder 110 from the annulus space.

The at least one discharge port may be arranged on at least one cylinder (for example, the first cylinder 110) to discharge at least part of the reaction product. A count of the at least one discharge port may be determined according to a volume of the reaction product to ensure that the volume of reaction product which is not discharged is less than or equal to a volume of the first cylinder 110.

In some embodiments of the present disclosure, the cylinder (for example, the reaction cylinder 130, the first cylinder 110, and the second cylinder 120) may be a cylindrical structure with openings at both ends. Taking the reaction cylinder 130 as an example, a lower bottom surface may refer to a bottom of the reaction cylinder 130 in a gravity direction, and an upper surface may refer to a top of the reaction cylinder 130 in an opposite direction of the gravity direction.

In some embodiments, the reaction cylinder 130 may be at least partially located inside the second cylinder 120. In some embodiments, the reaction cylinder 130 may be fixedly connected with the second cylinder 120. For example, an outer surface of a cylinder wall of the reaction cylinder 130 may be provided with a first connector, and the reaction cylinder 130 may be fixedly connected with an inner surface of a cylinder wall of the second cylinder 120 through the first connector. A fixed connection may include, for example, welding. In some embodiments, the reaction cylinder 130 may be detachably connected with the second cylinder 120. For example, the outer surface of the cylinder wall of the reaction cylinder 130 may be provided with a second connector, the inner surface of the cylinder wall of the second cylinder 120 may be provided with a third connector, and the second connector may be detachably connected with the third connector. Exemplary detachable connections may include, for example, threaded connections, and the like. As an example, both the second connector and the third connector may be provided with an internal thread, and the second connector and the third connector may be detachably connected by a bolt.

In some embodiments, an upper surface of the reaction cylinder 130 may be provided with an upper cylinder cover, and the upper cylinder cover of the reaction cylinder 130 may be integrally formed with the reaction cylinder 130. A lower bottom surface of the reaction cylinder 130 may be at least partially open. The reaction cylinder 130 may be communicated with the second cylinder 120 through the lower bottom surface of the reaction cylinder 130. The outer surface of the cylinder wall of the reaction cylinder 130 and the inner surface of the cylinder wall of the second cylinder 120 may form an annulus space (also known as a "first annulus space"), so that the reaction product enter the annulus space from an inside of the reaction cylinder 130. As described above, the first connector or a combination of the second connector and the third connector may be used to connect the outer surface of the cylinder wall of the reaction cylinder 130 with the inner surface of the cylinder wall of the second cylinder 120. Accordingly, as shown in FIG. 3, the annulus space may be an annular flow passage other than the above connector. In some embodiments, a shape of the annulus space may be a hollow cylinder. For example, if an outer diameter of the reaction cylinder 130 is a, an inner diameter of the second cylinder 120 is b, and a distance between the lower bottom surface of the reaction cylinder 130 and an upper surface of the second cylinder 120 is h, an annulus space size may be expressed as *π*(*b*² - *a*²)*h.*

The annulus space may float the reaction product (mineralized foam) in an overflow process, separating the reaction product (mineralized foam) from a byproduct (mainly liquid), which may be conducive to improving a purity of the reaction product, that is, a purity of the prepared nanoparticles. Furthermore, when the reaction product (mineralized foam) overflows in the annulus space, sufficient growth time may be reserved for the nanoparticle precursor or nanoparticle to make it grow completely, so as to complete termination of the nanoparticle precursor or nanoparticle reaction, reduce defects of the nanoparticle precursor or nanoparticle, and thus improve a yield of the reaction product. In some embodiments, the nanoparticles may be obtained by treating (for example, baking, etc.) the nanoparticles precursor. For example, a precursor of zinc oxide nanoparticles may be zinc hydroxide or basic zinc carbonate. The zinc oxide nanoparticles may be obtained by calcining and decomposing the precursor of zinc hydroxide nanoparticles or basic zinc carbonate nanoparticles. However, a size of the annulus space may affect an overflow rate of the reaction products, and then affect the purity and yield of the reaction product. For example, a large size of the annulus space may lead to a slow overflow of the reaction product from the annulus space to the first cylinder 110, which may lead to a reduction in a production efficiency of the nanoparticles. For another example, a small size of the annulus space may lead to a low gas content of the reaction product overflowing into the annulus space, which may lead to an agglomeration of nanoparticles, which may be not conducive to an existence of nanoparticles and may reduce the purity of the reaction product. Therefore, the annulus space size may need to satisfy preset requirements. According to different experimental conditions, different reactants and different requirements for the reaction product, a corresponding annulus space size may be designed. In some embodiments, the size of the annulus space may be related to a size of the reaction cylinder 130, a size of the second cylinder 120, a relative position of the reaction cylinder 130 and the second cylinder 120, etc. For example, the size of the annulus space may be related to a diameter of the reaction cylinder 130, a height of the reaction cylinder 130, a wall thickness of the reaction cylinder 130, a diameter of the second cylinder 120, a height of the second cylinder 120, a wall thickness of the second cylinder 120, and a relative position of the reaction cylinder 130 and the second cylinder 120. As used herein, the relative position between the reaction cylinder 130 and the second cylinder 120 may include that the upper surface of the reaction cylinder 130 is flush with the upper surface of the second cylinder 120, the upper surface of the reaction cylinder 130 is lower than the upper surface of the second cylinder 120, the upper surface of the reaction cylinder 130 is higher than the upper surface of the second cylinder 120, and so on.

Further, a lower bottom surface of the second cylinder 120 may be provided with a lower cylinder cover, and the upper surface of the second cylinder 120 may be at least partially open. The second cylinder 120 may be communicated with the first cylinder 110 through the upper surface of the second cylinder 120, so that the reaction product can enter the first cylinder 110 from the first annulus space. In some embodiments, when the reaction product enters the first cylinder 110 from the first annulus space, a termination of the nanoparticle reaction may be completed to form a uniform and stable reaction product (mineralized foam). In some embodiments, a lower bottom surface of the first cylinder 110 may be at least partially open, and accordingly, a communication between an opening on the upper surface of the second cylinder 120 and an opening on a lower surface of the first cylinder 110 may be realized through the opening on the upper surface of the second cylinder 120 and the opening on the lower surface of the first cylinder 110. In some embodiments, in addition to the opening portion, the lower surface of the first cylinder 110 may be provided with a lower cylinder cover. In some embodiments, the lower cylinder cover of the first cylinder 110 may be hermetically connected with an outer wall of the second cylinder 120. A sealed connection may include a fixed connection, a detachable connection, etc. Exemplary fixed connections may include, for example, welding, bonding, riveting, and the like. Exemplary detachable connections may include, for example, flange connections and the like. In some embodiments, the second cylinder 120 may also be provided with at least one pH detection port 121. As shown in FIG. 3, at least one pH detection port 121 may be configured to place a pH meter to monitor a pH value of an intermediate product in the reaction process or the reaction product after the reaction to monitor a growth process of nanoparticles.

In some embodiments, an upper surface of the first cylinder 110 may be provided with an upper cylinder cover. An upper cylinder cover of the first cylinder 110 may be fixedly connected with the first cylinder 110, such as welding. The upper cylinder cover of the first cylinder 110 may also be detachably connected with the first cylinder 110, such as bolt connection, buckle connection, etc. The upper cylinder cover of the first cylinder 110 may also be integrally formed with the first cylinder 110. In some embodiments, the first cylinder 110 may also be provided with at least one sampling port 112. As shown in FIG. 3, at least one sampling port 112 may be configured for a real- time detection of the reaction product.

In some embodiments, the reaction cylinder 130 may be at least partially located inside the first cylinder 110. Correspondingly, the upper cylinder cover of the first cylinder 110 may be provided with at least one opening corresponding to the at least one feed port. For each of at least one opening, a size and/or position of each opening may match a corresponding size and/or position of feed port.

In some embodiments, as shown in FIG. 1, the upper surface of the reaction cylinder 130 may be flush with the upper surface of the second cylinder 120. In some embodiments, the upper surface of the reaction cylinder 130 may also be lower than the upper surface of the second cylinder 120. In some embodiments, the upper surface of the reaction cylinder 130 may also be higher than the upper surface of the second cylinder 120.

In some embodiments, a distance between a lower bottom surface of the reaction cylinder 130 and a lower cylinder cover of the second cylinder 120 may need to satisfy preset conditions to ensure a smooth discharge of the reaction product and improve the yield of reaction product. If the distance between the lower bottom surface of the reaction cylinder 130 and the lower cylinder cover of the second cylinder 120 is too small, an overflow of reaction product may be blocked, so that the reaction product may not flow smoothly to discharge; However, if the distance between the lower bottom surface of the reaction cylinder 130 and the lower cylinder cover of the second cylinder 120 is too large, a large number of reaction product may accumulate in the second cylinder 120, preventing the reaction product from overflowing into the annulus space, causing waste of reaction product, which may be not conducive to improving the yield of reaction product. Therefore, the distance between the lower bottom surface of the reaction cylinder 130 and the lower cylinder cover of the second cylinder 120 should be appropriate. In some embodiments, the distance between the lower bottom surface of the reaction cylinder 130 and the lower cylinder cover of the second cylinder 120 may be 40- 80 mm. In some embodiments, the distance between the lower bottom surface of the reaction cylinder 130 and the lower cylinder cover of the second cylinder 120 may be 42-79mm. In some embodiments, the distance between the lower bottom surface of the reaction cylinder 130 and the lower cylinder cover of the second cylinder 120 may be 44- 78mm. In some embodiments, the distance between the lower bottom surface of the reaction cylinder 130 and the lower cylinder cover of the second cylinder 120 may be 46- 77 mm. In some embodiments, the distance between the lower bottom surface of the reaction cylinder 130 and the lower cylinder cover of the second cylinder 120 may be 48- 76mm. In some embodiments, the distance between the lower bottom surface of the reaction cylinder 130 and the lower cylinder cover of the second cylinder 120 may be 50- 75mm. In some embodiments, the distance between the lower bottom surface of the reaction cylinder 130 and the lower cylinder cover of the second cylinder 120 may be 51- 73mm. In some embodiments, the distance between the lower bottom surface of the reaction cylinder 130 and the lower cylinder cover of the second cylinder 120 may be 52- 71mm. In some embodiments, the distance between the lower bottom surface of the reaction cylinder 130 and the lower cylinder cover of the second cylinder 120 may be 53-70mm. In some embodiments, the distance between the lower bottom surface of the reaction cylinder 130 and the lower cylinder cover of the second cylinder 120 may be 54- 69mm. In some embodiments, the distance between the lower bottom surface of the reaction cylinder 130 and the lower cylinder cover of the second cylinder 120 may be 55- 68mm. In some embodiments, the distance between the lower bottom surface of the reaction cylinder 130 and the lower cylinder cover of the second cylinder 120 may be 56- 66mm. In some embodiments, the distance between the lower bottom surface of the reaction cylinder 130 and the lower cylinder cover of the second cylinder 120 may be 58- 64mm. In some embodiments, the distance between the lower bottom surface of the reaction cylinder 130 and the lower cylinder cover of the second cylinder 120 may be 60- 62 mm. In some embodiments, the distance between the lower bottom surface of the reaction cylinder 130 and the lower cylinder cover of the second cylinder 120 may be 61 mm.

In some embodiments, a size (e.g., diameter, height) of the reaction cylinder 130 may need to satisfy preset conditions to satisfy reaction conditions of nanoparticles. In some embodiments, the diameter of the reaction cylinder 130 may be 50- 100 mm. In some embodiments, the diameter of the reaction cylinder 130 may be 52- 98mm. In some embodiments, the diameter of the reaction cylinder 130 may be 54- 96mm. In some embodiments, the diameter of the reaction cylinder 130 may be 56- 94mm. In some embodiments, the diameter of the reaction cylinder 130 may be 58- 92mm. In some embodiments, the diameter of the reaction cylinder 130 may be 60- 90 mm. In some embodiments, the diameter of the reaction cylinder 130 may be 62- 88mm. In some embodiments, the diameter of the reaction cylinder 130 may be 64- 86mm. In some embodiments, the diameter of the reaction cylinder 130 may be 66- 84mm. In some embodiments, the diameter of the reaction cylinder 130 may be 68- 82mm. In some embodiments, the diameter of the reaction cylinder 130 may be 70- 80 mm. In some embodiments, the diameter of the reaction cylinder 130 may be 72- 78mm. In some embodiments, the diameter of the reaction cylinder 130 may be 73- 77 mm. In some embodiments, the diameter of the reaction cylinder 130 may be 74- 76mm. In some embodiments, the diameter of the reaction cylinder 130 may be 75 mm. In some embodiments, the height of the reaction cylinder 130 may be smaller than the second cylinder 120. In some embodiments, the height of the reaction cylinder 130 may be greater than the second cylinder 120. In some embodiments, the height of the reaction cylinder 130 may be equivalent to that of the second cylinder 120. As an example, the height of the reaction cylinder 130 may be 70- 120 mm. In some embodiments, the height of the reaction cylinder 130 may be 72- 118mm. In some embodiments, the height of the reaction cylinder 130 may be 74- 116mm. In some embodiments, the height of the reaction cylinder 130 may be 76- 114mm. In some embodiments, the height of the reaction cylinder 130 may be 78- 112mm. In some embodiments, the height of the reaction cylinder 130 may be 80- 110mm. In some embodiments, the height of the reaction cylinder 130 may be 82- 108mm. In some embodiments, the height of the reaction cylinder 130 may be 84- 106mm. In some embodiments, the height of the reaction cylinder 130 may be 86- 104mm. In some embodiments, the height of the reaction cylinder 130 may be 88- 102mm. In some embodiments, the height of the reaction cylinder 130 may be 90- 100 mm. In some embodiments, the height of the reaction cylinder 130 may be 92- 98mm. In some embodiments, the height of the reaction cylinder 130 may be 94- 96mm. In some embodiments, the height of the reaction cylinder 130 may be 95 mm.

In some embodiments, sizes (e.g., diameter, height) of the first cylinder 110 and/or the second cylinder 120 may need to satisfy preset conditions to ensure a smooth discharge of the reaction product. In some embodiments, a diameter of the first cylinder 110 may be 100- 150 mm. In some embodiments, the diameter of the first cylinder 110 may be 102- 148mm. In some embodiments, the diameter of the first cylinder 110 may be 104- 146mm. In some embodiments, the diameter of the first cylinder 110 may be 106- 144mm. In some embodiments, the diameter of the first cylinder 110 may be 108- 142mm. In some embodiments, the diameter of the first cylinder 110 may be 110- 140mm. In some embodiments, the diameter of the first cylinder 110 may be 112- 138mm. In some embodiments, the diameter of the first cylinder 110 may be 114- 136mm. In some embodiments, the diameter of the first cylinder 110 may be 116- 134mm. In some embodiments, the diameter of the first cylinder 110 may be 118- 132mm. In some embodiments, the diameter of the first cylinder 110 may be 120- 130mm. In some embodiments, the diameter of the first cylinder 110 may be 122- 128mm. In some embodiments, the diameter of the first cylinder 110 may be 124- 127 mm. In some embodiments, the diameter of the first cylinder 110 may be 126 mm.

In some embodiments, a diameter of the second cylinder 120 may be 90-130mm. In some embodiments, the diameter of the second cylinder 120 may be 91- 127 mm. In some embodiments, the diameter of the second cylinder 120 may be 92- 124mm. In some embodiments, the diameter of the second cylinder 120 may be 93- 121mm. In some embodiments, the diameter of the second cylinder 120 may be 94- 119 mm. In some embodiments, the diameter of the second cylinder 120 may be 95- 116mm. In some embodiments, the diameter of the second cylinder 120 may be 95.5- 114mm. In some embodiments, the diameter of the second cylinder 120 may be 96- 112mm. In some embodiments, the diameter of the second cylinder 120 may be 96.5- 110mm. In some embodiments, the diameter of the second cylinder 120 may be 97- 108mm. In some embodiments, the diameter of the second cylinder 120 may be 97.5- 106mm. In some embodiments, the diameter of the second cylinder 120 may be 98- 104mm. In some embodiments, the diameter of the second cylinder 120 may be 98.5- 102mm. In some embodiments, the diameter of the second cylinder 120 may be 99.5- 101 mm. In some embodiments, the diameter of the second cylinder 120 may be 100 mm.

In some embodiments, a height of the first cylinder 110 may be equal to the height of the second cylinder 120. In some embodiments, the height of the first cylinder 110 may be greater than the height of the second cylinder 120. In some embodiments, the height of the first cylinder 110 may be less than the height of the second cylinder 120. In some embodiments, the height of the first cylinder 110 may be 80-120 mm. In some embodiments, the height of the first cylinder 110 may be 82- 118mm. In some embodiments, the height of the first cylinder 110 may be 84-116mm. In some embodiments, the height of the first cylinder 110 may be 86-114mm. In some embodiments, the height of the first cylinder 110 may be 88-112mm. In some embodiments, the height of the first cylinder 110 may be 90-110mm. In some embodiments, the height of the first cylinder 110 may be 92-108mm. In some embodiments, the height of the first cylinder 110 may be 94-106mm. In some embodiments, the height of the first cylinder 110 may be 96-104mm. In some embodiments, the height of the first cylinder 110 may be 97-102mm. In some embodiments, the height of the first cylinder 110 may be 98- 100 mm. In some embodiments, the height of the first cylinder 110 may be 99 mm. In some embodiments, the height of the second cylinder 120 may be 120- 160mm. In some embodiments, the height of the second cylinder 120 may be 122- 158mm. In some embodiments, the height of the second cylinder 120 may be 124- 156mm. In some embodiments, the height of the second cylinder 120 may be 126- 154mm. In some embodiments, the height of the second cylinder 120 may be 128- 152mm. In some embodiments, the height of the second cylinder 120 may be 130- 150mm. In some embodiments, the height of the second cylinder 120 may be 132- 148mm. In some embodiments, the height of the second cylinder 120 may be 134- 146mm. In some embodiments, the height of the second cylinder 120 may be 136- 145 mm. In some embodiments, the height of the second cylinder 120 may be 138- 144mm. In some embodiments, the height of the second cylinder 120 may be 140- 143mm. In some embodiments, the height of the second cylinder 120 may be 142 mm.

As an example only, when the diameter of the second cylinder 120 is smaller than the diameter of the first cylinder 110 and the upper surface of the second cylinder 120 is higher than the lower bottom surface of the first cylinder 110, the outer surface of the cylinder wall of the second cylinder 120 may form an annulus space (also known as the "second annulus space") with an inner surface of a cylinder wall of the first cylinder 110 to store the reaction product or serve as a channel for discharging the reaction product. A size of the second annulus space may be related to a size of the first cylinder 110, the size of the second cylinder 120, a relative position of the first cylinder 110 and the second cylinder 120, etc. For example, the size of the second annulus space may be related to the diameter of the first cylinder 110, the height of the first cylinder 110, a wall thickness of the first cylinder 110, the diameter of the second cylinder 120, the height of the second cylinder 120, the wall thickness of the second cylinder 120, and a relative position of the first cylinder 110 and the second cylinder 120. As used herein, the relative position of the first cylinder 110 and the second cylinder 120 may include a distance between a sealing connection point (such as a welding point) of the first cylinder 110 and the second cylinder 120 and the upper surface of the second cylinder 120. As shown in FIG. 2, the sealing connection point (for example, welding point) of the first cylinder 110 and the second cylinder 120 may be the connection point between the lower bottom surface of the first cylinder 110 and the outer surface of the cylinder wall of the second cylinder 120. When other conditions (such as the size of the first cylinder 110 and the size of the second cylinder 120) are the same, the greater the distance between the sealing connection point (such as the welding point) of the first cylinder 110 and the second cylinder 120 and the upper surface of the second cylinder 120, the larger the size of the second annulus space.

In some embodiments, the upper surface of the second cylinder 120 may be 30- 60mm higher than the lower bottom surface of the first cylinder 110. In some embodiments, the upper surface of the second cylinder 120 may be 31- 58 mm higher than the lower bottom surface of the first cylinder 110. In some embodiments, the upper surface of the second cylinder 120 may be 32- 56 mm higher than the lower bottom surface of the first cylinder 110. In some embodiments, the upper surface of the second cylinder 120 may be 34- 54mm higher than the lower bottom surface of the first cylinder 110. In some embodiments, the upper surface of the second cylinder 120 may be 35- 52 mm higher than the lower bottom surface of the first cylinder 110. In some embodiments, the upper surface of the second cylinder 120 may be 36- 50mm higher than the lower bottom surface of the first cylinder 110. In some embodiments, the upper surface of the second cylinder 120 may be 37- 48mm higher than the lower bottom surface of the first cylinder 110. In some embodiments, the upper surface of the second cylinder 120 may be 38- 46mm higher than the lower bottom surface of the first cylinder 110. In some embodiments, the upper surface of the second cylinder 120 may be 39- 44mm higher than the lower bottom surface of the first cylinder 110. In some embodiments, the upper surface of the second cylinder 120 may be 39.5- 42 mm higher than the lower bottom surface of the first cylinder 110. In some embodiments, the upper surface of the second cylinder 120 may be 40 mm higher than the lower bottom surface of the first cylinder 110.

In some embodiments, each of the at least one discharge port may be provided with a discharge pipe 111. A size of the discharge pipe 111 and the size of the first cylinder 110 may satisfy preset conditions to ensure that the reaction product can be discharged from the first cylinder 110 (or the second annulus space) through the discharge pipe 111 smoothly. In some embodiments, the discharge port may be arranged on the lower cylinder cover of the first cylinder 110. In some embodiments, as shown in FIG. 2, the discharge port may also be set at the connection between the lower cylinder cover of the first cylinder 110 and the cylinder wall of the first cylinder 110 to ensure that the reaction products are discharged from the first cylinder 110 (or the second annulus space) through the discharge pipe 111. In some embodiments, the discharge pipe 111 may form a preset included angle with an axial direction of the first cylinder 110 or the cylinder wall of the first cylinder 110 to facilitate the discharge of reaction product from the discharge pipe 111. For example, an included angle between the discharge pipe 111 and the axial direction of the first cylinder 110 or the cylinder wall may be 0- 30°. In some embodiments, the included angle between the discharge pipe 111 and the axial direction of the first cylinder 110 or the cylinder wall may be 1- 28°. In some embodiments, the included angle between the discharge pipe 111 and the axial direction of the first cylinder 110 or the cylinder wall may be 2- 26°. In some embodiments, the included angle between the discharge pipe 111 and the axial direction of the first cylinder 110 or the cylinder wall may be 3- 24°. In some embodiments, the included angle between the discharge pipe 111 and the axial direction of the first cylinder 110 or the cylinder wall may be 4- 22°. In some embodiments, the included angle between the discharge pipe 111 and the axial direction of the first cylinder 110 or the cylinder wall may be 5-20°. In some embodiments, the included angle between the discharge pipe 111 and the axial direction of the first cylinder 110 or the cylinder wall may be 6- 18°. In some embodiments, the included angle between the discharge pipe 111 and the axial direction of the first cylinder 110 or the cylinder wall may be 7- 16°. In some embodiments, the included angle between the discharge pipe 111 and the axial direction of the first cylinder 110 or the cylinder wall may be 8- 14°. In some embodiments, the included angle between the discharge pipe 111 and the axial direction of the first cylinder 110 or the cylinder wall may be 9- 12°. In some embodiments, the included angle between the discharge pipe 111 and the axial direction of the first cylinder 110 or the cylinder wall may be 10- 11 °.

In some embodiments, the stirring device 140 may include a first power component, at least one layer of stirring sheet, and a transmission device 143. One end of the transmission device 143 may be connected with the first power component, and the other end may be connected with at least one layer of the stirring sheet. In some embodiments, the first power component may be configured to provide power for mixing at least one layer of the stirring sheet. The first power component may include a motor or the like. In some embodiments, the transmission device 143 may be configured to drive at least one layer of the stirring sheet to move based on the drive of the first power component, so that the reactants may be fully mixed to form a bubble liquid film to provide a reaction environment for the nanoparticles. The transmission device 143 may include a mixing shaft or the like. In some embodiments, the stirring device 140 may also include a bearing bush 146 for fixing the protective transmission device 143 (for example, the mixing shaft).

In some embodiments, the upper cylinder cover of the first cylinder 110 may be provided with a first through hole, and the upper cylinder cover of the reaction cylinder 130 may be provided with a second through hole. The first through hole may match the second through hole. For example, a position of the first through hole may correspond to the second through hole, and/or a size of the first through hole may be equivalent to a size of the second through hole, so that the transmission device 143 may pass through the upper cylinder cover of the first cylinder 110 and the upper cylinder cover of the reaction cylinder 130, so that at least one layer of the stirring sheet may be located in the reaction cylinder 130.

In some embodiments, a count of layers of at least one layer of the stirring sheet may be determined according to the reaction conditions and/or reaction parameters required to generate the nanoparticles. For example, when a chemical reaction to generate the nanoparticles takes a long time, the count of layers of the at least one layer of the stirring sheet may include 2, 3, 4, 5, etc., which may make the mixing more intense and the reaction of the nanoparticles more sufficient, while reducing a reaction time and improving a reaction efficiency of the nanoparticles. As an example, when *FeCl*₃ - 6*H*₂*O*, *FeCl*₂ - 6*H*₂*O* react with ammonia to prepare nanoparticles of *Fe*₃*O*₄, the count of layers of the at least one layer of the stirring sheet may be 3, 4 or 5. As another example, when the reaction time required to generate nanoparticles is relatively short, the count of layers of the at least one layer of the stirring sheet may be one. As an example, when red phosphorus is used to prepare superfine red phosphorus composite flame retardant, the count of layers of the at least one layer of the stirring sheet may be one.

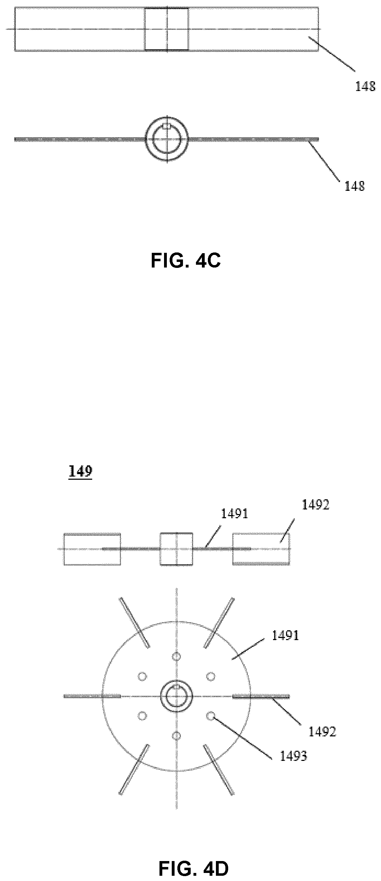

In some embodiments, the stirring sheets on different layers of the at least one layer of the stirring sheets may be the same or different. In some embodiments, the at least one layer of the stirring sheet may include a stirring disk, a propelled stirring sheet, a straight paddle- type stirring sheet or a disk turbine stirring sheet. As an example, when the count of layers of the at least one layer of the stirring sheet is 2, a shape, structure and/or size of an upper layer of the stirring sheet and a lower layer of the stirring sheet may be the same or different. For example, the upper layer of the stirring sheet may be a stirring disk, and the lower layer of the stirring sheet may be a propelled stirring sheet or a straight paddle- type stirring sheet or a disk turbine stirring sheet. For the specific description of the stirring disk, propelled stirring sheet, straight paddle- type stirring sheet or disk turbine stirring sheet, see FIG. 4A, FIG. 4B, FIG. 4C and FIG. 4D of the present disclosure and their related descriptions.

The at least one layer of the stirring sheet and the upper cylinder cover of the reaction cylinder 130 may form a first space, in the first space, reactants and gases may be mixed to form a gas- liquid mixture with a certain gas- liquid ratio (also known as "bubbles"). The gas- liquid ratio may refer to a volume ratio of gas to liquid entering the reaction cylinder 130. In some embodiments, the gas- liquid ratio of the gas- liquid mixture in the first space may be 2%- 98%. In some embodiments, the gas- liquid ratio of the gas- liquid mixture in the first space may be 3%- 94%. In some embodiments, the gas- liquid ratio of the gas- liquid mixture in the first space may be 4%- 90%. In some embodiments, the gas- liquid ratio of the gas- liquid mixture in the first space may be 5%- 86%. In some embodiments, the gas- liquid ratio of the gas- liquid mixture in the first space may be 6%- 82%. In some embodiments, the gas- liquid ratio of the gas- liquid mixture in the first space may be 7%- 78%. In some embodiments, the gas- liquid ratio of the gas- liquid mixture in the first space may be 8%- 74%. In some embodiments, the gas- liquid ratio of the gas- liquid mixture in the first space may be 8.5%- 70%. In some embodiments, the gas- liquid ratio of the gas- liquid mixture in the first space may be 9%- 66%. In some embodiments, the gas- liquid ratio of the gas- liquid mixture in the first space may be 9.5%- 63%. In some embodiments, the gas- liquid ratio of the gas- liquid mixture in the first space may be 10%- 60%. At the same time, the at least one layer of the stirring sheet and the lower bottom surface of the reaction cylinder 130 may form a second space, in the second space, the nanoparticles may nucleate and grow. In some embodiments, a volume of the second space (or a distance between the at least one layer of the stirring sheet (such as the lowest layer of the stirring sheet) and the lower bottom surface of the reaction cylinder 130) may affect the reaction of the nanoparticles. For example, the larger the volume of the second space (or the greater the distance between the at least one layer of the stirring sheet (such as the lowest layer of the stirring sheet) and the lower bottom surface of the reaction cylinder 130), the more sufficient the reaction of the nanoparticles.

In some embodiments, the stirring device 140 may also include a coupling device 145, which may be configured to connect the first power component (not shown in the figure) and the transmission device 143. An exemplary coupling device 145 may include a coupling or the like. In some embodiments, a size of the transmission device 143 (such as a stirring shaft) deep into the coupling device 145 may be adjusted, so that the at least one layer of the stirring sheet may be lifted, that is, a distance from the at least one layer of the stirring sheet to the upper cylinder cover of the reaction cylinder 130 and/or the lower bottom surface of the reaction cylinder 130 (the volume of the first space or the volume of the second space) may be adjusted, so that the reaction process may be controlled.

In some embodiments, a shape of the stirring sheet may include a circle, a square or other irregular shape. As an example, the stirring sheet may be round. The at least one layer of the stirring sheet may include at least one layer of the stirring disk 141. In some embodiments, the at least one layer of the stirring disk 141 may be a self- priming stirring disk. When the self- priming stirring sheet is running at a high speed, the gas may be brought into the reactor through a hollow stirring shaft, and the gas may be continuously sucked into the liquid phase to form a uniform gas- liquid mixture. In some embodiments, the at least one layer of the stirring disk 141 may include an opening along which the gas- liquid mixture may enter the second space.

When the gas- liquid mixture enters the second space from the first space through the at least one layer of stirring disk 141, a negative pressure space may be instantly formed in the first space, thereby affecting a vacuum degree in the first space and affecting a quality of bubbles (for example, the count of bubbles, a size of bubbles, and a thickness of liquid film). Therefore, the first space may need to satisfy preset conditions to ensure that the gas and reactants are mixed evenly and the bubble quality is guaranteed. In some embodiments, a distance from the at least one layer of the stirring disk 141 to the upper cylinder cover of the reaction cylinder 130 (for example, a distance from a center point of a top layer of the stirring disk 141 to the upper cylinder cover of the reaction cylinder 130) may be 5- 30mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 7- 28 mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 9- 26mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 10- 24 mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 11- 22 mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 12- 20mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 13-18 mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 14- 16 mm. In some embodiments, the distance from the at least one layer of the stirring disk 141 to the upper cylinder cover of the reaction cylinder 130 (for example, the distance from the center point of the top layer of the stirring disk 141 to the upper cylinder cover of the reaction cylinder 130) may be 15 mm.

Furthermore, the second space needs to meet the preset conditions to ensure the reaction environment of nanoparticles. In some embodiments, the distance from the at least one layer of the stirring disk 141 to the lower bottom surface of the reaction cylinder 130 (for example, the distance from the center point of the lowest layer of stirring disk 141 to the lower bottom surface of the reaction cylinder 130) may be 70- 90 mm. In some embodiments, the distance from the at least one layer of the stirring disk 141 to the lower bottom surface of the reaction cylinder 130 (for example, the distance from the center point of the lowest layer of stirring disk 141 to the lower bottom surface of the reaction cylinder 130) may be 71-88mm. In some embodiments, the distance from the at least one layer of the stirring disk 141 to the lower bottom surface of the reaction cylinder 130 (for example, the distance from the center point of the lowest layer of stirring disk 141 to the lower bottom surface of the reaction cylinder 130) may be 72- 86mm. In some embodiments, the distance from the at least one layer of the stirring disk 141 to the lower bottom surface of the reaction cylinder 130 (for example, the distance from the center point of the lowest layer of stirring disk 141 to the lower bottom surface of the reaction cylinder 130) may be 73- 94mm. In some embodiments, the distance from the at least one layer of the stirring disk 141 to the lower bottom surface of the reaction cylinder 130 (for example, the distance from the center point of the lowest layer of stirring disk 141 to the lower bottom surface of the reaction cylinder 130) may be 74- 82mm. In some embodiments, the distance from at least one layer of the stirring disk 141 to the lower bottom surface of the reaction cylinder 130 (for example, the distance from the center point of the lowest layer of the stirring disk 141 to the lower bottom surface of the reaction cylinder 130) may be 75- 80 mm. In some embodiments, the distance from the at least one layer of the stirring disk 141 to the lower bottom surface of the reaction cylinder 130 (for example, the distance from the center point of the lowest layer of stirring disk 141 to the lower bottom surface of the reaction cylinder 130) may be 76- 79.5 mm. In some embodiments, the distance from at least one layer of the stirring disk 141 to the lower bottom surface of the reaction cylinder 130 (for example, the distance from the center point of the lowest layer of the stirring disk 141 to the lower bottom surface of the reaction cylinder 130) may be 77- 79 mm. In some embodiments, the distance from at least one layer of the stirring disk 141 to the lower bottom surface of the reaction cylinder 130 (for example, the distance from the center point of the lowest layer of the stirring disk 141 to the lower bottom surface of the reaction cylinder 130) may be 78.5 mm.

In some embodiments, in order to prevent the gas- liquid mixture from flowing into the lower part of the reaction cylinder 130 (for example, the second space) along a gap between the stirring sheet (for example, the stirring disk 141) and an inner surface of the cylinder wall of the reaction cylinder 130, a distance from the outside of the at least one layer of the stirring disk 141 to the inner surface of the cylinder wall of the reaction cylinder 130 may be 4- 7 mm. In some embodiments, the distance from the outside of the at least one layer of the stirring disk 141 to the inner surface of the cylinder wall of the reaction cylinder 130 may be 4.5- 6.5mm. In some embodiments, the distance from the outside of the at least one layer of the stirring disk 141 to the inner surface of the cylinder wall of the reaction cylinder 130 may be 5- 6mm. In some embodiments, the distance from the outside of the at least one layer of the stirring disk 141 to the inner surface of the cylinder wall of the reaction cylinder 130 may be 5.5 mm.

It should be noted that FIG. 1, FIG. 2, and FIG. 3 are only examples and do not define a specific shape and structure of the multiphase interface reactor 100. Those skilled in the art may make various modifications, improvements and amendments to the present disclosure without paying creative labor, and these modifications, improvements and amendments fall within the scope of the present disclosure.

FIG. 4A is a schematic diagram of an exemplary stirring disk according to some embodiments in the present disclosure. The at least one layer of the stirring disk 141 may be configured to disperse the gas- liquid mixture in the first space, so that the gas- liquid mixture may be uniformly dispersed to form a large count of tiny bubbles, forming a bubble liquid film, so as to form a nanoparticle reaction environment. Among them, the reactants may react on the liquid film between bubbles to generate the reaction product. The size and uniformity of the reaction product may be controlled by controlling a thickness of the liquid film. The thickness of the liquid film may be 10 nm to 100 nm. In some embodiments, the thickness of the liquid film may be 20 nm to 90 nm. In some embodiments, the thickness of the liquid film may be 30 nm to 80 nm. In some embodiments, the thickness of the liquid film may be 40 nm to 70 nm. In some embodiments, the thickness of the liquid film may be 50 nm to 60 nm. In some embodiments, the thickness of the liquid film may be 54nm- 56nm.

As shown in FIG. 4A, the at least one layer of the stirring disk 141 may include at least one bubble cap 142 and at least one opening 144. As used herein, the at least one opening 144 may be one- to- one corresponding to the at least one bubble cap 142, and each of the at least one opening 144 may be located below a corresponding bubble cap 142 of the at least one opening 144. In some embodiments, the at least one bubble cap 142 may be an arc- shaped bubble cap. In some embodiments, a count of the at least one bubble cap 142 may be set as required. For example, the count of the at least one bubble cap 142 may be determined according to a size of the stirring disk 141. When the size of the stirring disk 141 is fixed, the more the count of the at least one bubble cap 142 is, the more fully the gas- liquid mixture may be dispersed, and the easier it is to prepare nanoparticles, making the reaction more fully. In some embodiments, the count of the at least one bubble cap 142 may be 20, 15, 10, 9, 8, 7, 6, 5, etc. In some embodiments, the bubble cap 142 may include a portion of a hollow sphere. For example, the bubble cap 142 may be a quarter hollow sphere. In some embodiments, the bubble cap 142 may include a portion of a hollow cylinder. In some embodiments, the bubble cap 142 may also include a portion of a hollow polyhedron. For example, the bubble cap 142 may be part of a hollow tetrahedron. For another example, the bubble cap 142 may be part of a hollow hexahedron.

In some embodiments, a size of the opening 144 may need to satisfy preset conditions. As described above, the stirring disk 141 may form a second space with the lower bottom surface of the reaction cylinder 130, and the gas- liquid mixture may pass through the at least one bubble cap 142, and then through the at least one opening 144 to reach the second space. The bubble cap 142 and the opening 144 may be configured to disperse the gas- liquid mixture to form a liquid film (in which the bubble may be a dispersed phase and the liquid film may be a continuous phase) to form a reaction environment for nanoparticles. If the size of the opening 144 is too large, the gas- liquid mixture may disperse to the second space too quickly through the bubble cap 142 and the opening 144, which may lead to insufficient dispersion, which may be not conducive to the nucleation and/or growth of the nanoparticles; However, if the size of the opening 144 is too small, the gas- liquid mixture may be dispersed too slowly, which may reduce a reaction rate. Therefore, the size of the opening 144 may need to be appropriate. In some embodiments, a diameter of the opening 144 may be 3- 8mm. In some embodiments, the diameter of the opening 144 may be 3.5- 7mm. In some embodiments, the diameter of the opening 144 may be 4- 6 mm. In some embodiments, the diameter of the opening 144 may be 4.5- 5.5mm. In some embodiments, the diameter of the opening 144 may be 5 mm.

FIG. 4B is a schematic diagram of an exemplary propelled stirring sheet according to some embodiments in the present disclosure. As shown in FIG. 4B, the propelled stirring sheet may include at least one propelled stirring sheet 147. The at least one propelled stirring sheet 147 may be uniformly distributed around the transmission device 143 (e.g., a mixing shaft). The count of the at least one propelled stirring sheet 147 may be 2, 3, 4 or 5, etc. In some embodiments, the at least one propelled stirring sheet 147 may tilt toward the lower cylinder cover of the second cylinder 120. Specifically, the included angle between at least one propelled stirring sheet 147 and the horizontal plane may be 40°- 50°. In some embodiments, the included angle between at least one propelled stirring sheet 147 and the horizontal plane may be 41 °- 49°. In some embodiments, the included angle between at least one propelled stirring sheet 147 and the horizontal plane may be 42°- 48°. In some embodiments, the included angle between at least one propelled stirring sheet 147 and the horizontal plane may be 43°- 47°. In some embodiments, the included angle between at least one propelled stirring sheet 147 and the horizontal plane may be 44°- 46°. In some embodiments, the included angle between at least one propelled stirring sheet 147 and the horizontal plane may be 45°.

FIG. 4C is a front view and a top view of an exemplary straight paddle- type stirring sheet according to some embodiments in the present disclosure. As shown in FIG. 4C, the straight paddle- type stirring sheet may comprise at least one straight paddle- type stirring sheet 148. At least one straight paddle- type stirring sheet 148 may be uniformly distributed around the driving device 143 (for example, the mixing shaft). The count of the at least one straight paddle- type stirring sheet 148 may be 2, 3, 4 or 5, etc. In some embodiments, at least one straight paddle- type stirring sheet 148 may be perpendicular to the lower cylinder cover of the second cylinder 120.

FIG. 4D is a front view and a top view of an exemplary disk turbine stirring sheet according to some embodiments in the present disclosure. As shown in FIG. 4D, the disk turbine stirring sheet 149 may include a horizontal disk 1491 and at least one turbine type stirring sheet 1492. The at least one turbine type stirring sheet 1492 may be uniformly distributed around an outer circumference of the horizontal disk 1491. In some embodiments, the at least one turbine type stirring sheet 1492 may be perpendicular to the horizontal disk 1491 or the lower cylinder cover of the second cylinder 120. A count of the at least one turbine stirring sheet 1492 may be 2, 3, 4, 5 or 6, etc. In some embodiments, at least one horizontal disk opening 1493 may be evenly distributed on the horizontal disk 1492.

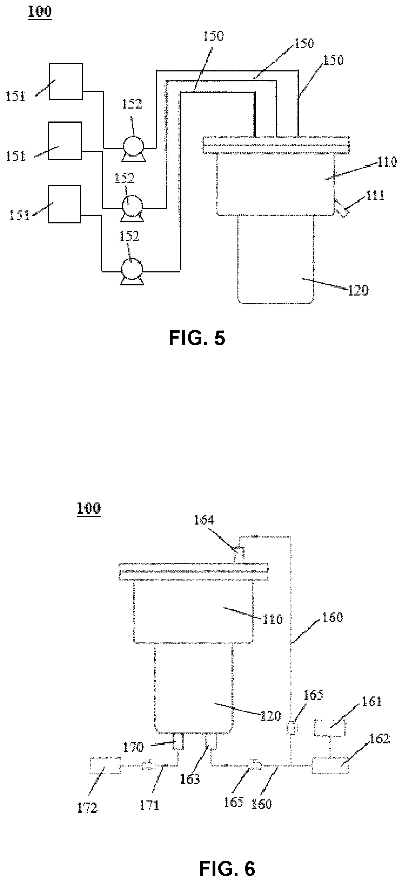

FIG. 5 is a schematic diagram of a structure of another multiphase interface reactor according to some embodiments in the present disclosure.

In some embodiments, the reactor 100 may also include a dosing device for feeding reactant and/or gas to the reaction cylinder 130. As shown in FIG. 5, the dosing device may include at least one storage tank 151, at least one feed pipe 150, and at least one second power component 152.

The at least one storage tank 151 may be configured to store the reactants and/or gases. In some embodiments, the at least one storage tank 151 may include a dosing tank, which may be configured to pretreat at least some of the reactants and store the pretreated reactants. For example, when preparing the superfine red phosphorus composite flame retardant, red phosphorus may be dispersed in sodium hydroxide aqueous solution in the dosing tank for dispersion treatment to obtain the suspension of superfine red phosphorus ions, and the suspension of superfine red phosphorus ions may be stored in the dosing tank.

The at least one feed pipe 150 may be configured to connect the at least one feed port and the at least one storage tank 151 to provide access for transporting reactants in the at least one storage tank 151 to the reaction cylinder 130.

The at least one second power component 152 may be configured to provide power for transporting reactants from the at least one storage tank 151 to the reaction cylinder 130. In some embodiments, the at least one second power component 152 may include a metering pump, a servo pump, and the like. In some embodiments, in order to reduce a loss of suction line of the at least one second power component 152 (such as the metering pump or the servo pump), a distance between the at least one second power component 152 and the at least one storage tank 151 may be less than a distance between the at least one second power component 152 and the reaction cylinder 130. In some embodiments, at least one feed port height of the at least one second power component 152 may be lower than at least one discharge port height of at least one storage tank 151.

In some embodiments, each feed pipe 150 may include a flow meter for controlling a feed flow of each reactant. For example, the flow meter may include an external clip type ultrasonic flow meter, which is configured to accurately control the flow of reactants without affecting delivery of reactants in the at least one feed pipe 150. In some embodiments, each feed pipe 150 may include a solenoid valve for controlling a feeding sequence of the reactants. In some embodiments, each feed pipe 150 may include a pressure sensor for monitoring a pressure in each feed pipe 150.

In some embodiments, each feed pipe 150 may include at least one filter for filtering and impurity removal of the reactants to purify reactants. Further, a count of the at least one filter may be two. In some embodiments, the at least one filter may be filtered with a filter cloth to facilitate replacement. In some embodiments, the at least one filter may be located on the upper part of the at least one storage tank 151, so that the reactants may be filtered by the at least one filter before being stored in the at least one storage tank 151.

In some embodiments, the count of at least one storage tank 151, at least one feed pipe 150, and/or the at least one second power component 152 may be determined according to the types of reactants and gases. For example, each storage tank 151 may store a reactant or gas, and each storage tank 151 may be connected to a feed port through the feed pipe 150.

In some embodiments, the dosing device may also include a second control component, the second control component may at least be configured to control a ratio of reactants and gases and/or a feeding sequence. For example, the second control component may control the flow meters on different feed pipes 150 according to different reactions to control different ratios of the reactants and gases. As another example, the second control component may control solenoid valves on different feed pipes 150 according to different reactions to control the feeding sequence of different reactants and gases. For example, the second control component may also control feeding times of the reactants and gases. The feeding times may include a start feeding time, an end feeding time, a feeding time, etc. It may be understood that the dosing device of the present disclosure may ensure a uniformity of the gas- liquid mixture entering the reaction cylinder 130 by controlling the above dosing and feeding processes, so as to further ensure the uniformity of the generated nanoparticles.

FIG. 6 is a schematic diagram of a structure of another multiphase interface reactor according to some embodiments in the present disclosure.

In some embodiments, the reactor 100 may also include a washing device for washing components of the reactor 100 (for example, the first cylinder 110, the second cylinder 120, and/or the reaction cylinder 130). In some embodiments, the first cylinder 110 may be provided with at least one first cleaning port 164 for connecting the washing device. For example, as shown in FIG. 6, the at least one first cleaning port 164 may be arranged on the upper cylinder cover of the first cylinder 110. As another example, the at least one first cleaning port 164 may be arranged on the cylinder wall of the first cylinder 110. In some embodiments, a count of the first cleaning ports 164 may be 1, 2, 3, 4, 5, etc. In some embodiments, an included angle between the first cleaning port 164 and the axial direction of the first cylinder 110 or the cylinder wall may be any angle.

In some embodiments, the second cylinder 120 may also be provided with at least one second cleaning port 163 for connecting a washing device. For example, as shown in FIG. 6, the at least one second cleaning port 163 may be arranged on the lower cylinder cover of the second cylinder 120 to spray cleaning liquid upward from the second cleaning port 163 to clean the reactor 100. For another example, at least one second cleaning port 163 may be arranged on the wall of the second cylinder 120. In some embodiments, a count of the second cleaning ports 163 may be 1, 2, 3, 4, 5, etc.

In some embodiments, the washing device may include a liquid supply module and a waste liquid collection module. The liquid supply module may be used to supply cleaning liquid to the components of the reactor 100 (for example, the first cylinder 110, the second cylinder 120 and/or the reaction cylinder 130), the at least one filter and/or the at least one storage tank 151. The cleaning liquid may be determined according to the reactants and/or reaction products. For example, the cleaning liquid may include inorganic cleaning agent and/or organic cleaning agent. Embodiments of inorganic cleaning agents may include clean water, dilute hydrochloric acid and/or dilute sulfuric acid. Embodiments of organic cleaning agents may include chlorinated hydrocarbon cleaning agents, etc. In some embodiments, the liquid supply module may include a storage tank 161, a liquid supply pipeline 160, and a third power component 162. The storage tank 161 may be configured for storing cleaning fluid. The liquid supply pipeline 160 may be configured to connect the storage tank 161 with the at least one first cleaning port 164 and/or the at least one second cleaning port 163, the cleaning port of at least one filter, and the cleaning port of the at least one storage tank 151 to provide a path for transporting cleaning liquid from the storage tank 161 to the components of the reactor 100 (for example, the first cylinder 110, the second cylinder 120, and/or the reaction cylinder 130), the at least one filter, and/or the at least one storage tank 151. In some embodiments, the at least one first cleaning port 164, at least one second cleaning port 163, at least one filter cleaning port and/or at least one cleaning port of the storage tank 151 may be sector cleaning ports, which may increase the cleaning area. The third power component 162 may be used to provide power for transporting cleaning fluid from the storage tank 161 to the at least one first cleaning port 164 and/or the at least one second cleaning port 163, at least one filter cleaning port, and at least one cleaning port of the storage tank 151. By way of example, the third power component 162 may include a motor or the like.

In some embodiments, the liquid supply module may also include a third control component, which may at least be configured to control a supply flow and/or supply time of the cleaning liquid. For example, the liquid supply pipe 160 may be provided with a component for controlling the flow, such as a first solenoid valve or a first flow meter 165. The third control component may control the supply flow and/or the supply time of the cleaning liquid by controlling the first solenoid valve or the first flow meter 165. In some embodiments, the third control component may also be configured to control the third power component 162 to simultaneously clean the components of the reactor 100 (for example, the first cylinder 110, the second cylinder 120, and/or the reaction cylinder 130) through the at least one first cleaning port 164 and the at least one second cleaning port 163. In some embodiments, the third control component may also be configured to control the third power component 162 to control cleaning of the components of the reactor 100 (for example, the first cylinder 110, the second cylinder 120, and/or the reaction cylinder 130) at different time intervals through the at least one first cleaning port 164 and the at least one second cleaning port 163. For example, the third control component may first control the cleaning of the first cylinder 110 and/or the third cylinder 130 through the at least one first cleaning port 164, and then control cleaning of the second cylinder 120 and/or the reaction cylinder 130 through the at least one second cleaning port 163. As another example, depending on cleanliness of the components of the reactor 100, the third control component may control a cleaning time for cleaning the components of the reactor 100 through the at least one first cleaning port 164 and/or the at least one second cleaning port 163, or the third control component may control the supply time of the cleaning liquid through the at least one first cleaning port 164 and/or the at least one second cleaning port 163. The supply time may include a start time, an end time and a supply time. In some embodiments, the third control component may also be configured to control the third power component 162 to clean the at least one filter and/or the at least one storage tank 151. For example, the third control component may control the cleaning time of at least one filter and/or the at least one storage tank 151, the supply flow of the cleaning liquid, and the like.

In some embodiments, the waste liquid collection module may be configured to collect waste liquid. As used herein, the waste liquid may include liquid obtained from the cleaning liquid after cleaning the components of the reactor 100 (for example, the first cylinder 110, the second cylinder 120, and/or the reaction cylinder 130), the at least one filter, and/or the at least one storage tank 151. In some embodiments, the waste liquid collection module may include at least one waste liquid pipeline 171 and at least one waste liquid collection tank 172. The at least one waste liquid pipeline 171 may be configured to connect the at least one waste liquid collecting tank 172 and at least one waste liquid collection port 170. In some embodiments, the at least one waste liquid collection port 170 may be arranged on the lower cylinder cover of the second cylinder 120, a bottom of the at least one filter, and/or a bottom of at least one storage tank 151. In some embodiments, the first cylinder 110 may also be provided with the at least one waste liquid collection port. As an example, the discharge pipe 111 may be configured as a waste liquid collection port. In some embodiments, a count of the waste liquid collection ports 170 may be 1, 2, 3, 4, 5, etc.

In some embodiments, the washing device may also include a waste liquid treatment module. The waste liquid processing module may be configured to process waste liquid. In some embodiments, the waste liquid processing module may include at least one waste liquid processing pipeline, at least one waste liquid processing component, and at least one fourth power component. The waste liquid processing pipe may be configured for connecting the at least one waste liquid processing component and at least one waste liquid discharge port. In some embodiments, the at least one waste liquid pipeline 171 may be configured as at least one waste liquid processing pipeline, and the at least one waste liquid collection port 170 may be configured as the at least one waste liquid discharge port. Accordingly, the at least one waste liquid pipe 171 may be connected with the at least one waste liquid processing component and the at least one waste liquid collection port 170. The at least one fourth power component may be configured to provide power for transporting waste liquid from the at least one waste liquid discharge port to the at least one waste liquid processing component. The fourth power component may include a motor, etc. In some embodiments, the waste liquid processing module may also include a fourth control component. The fourth control component may at least be configured to control the processing flow of the waste liquid. For example, at least one flow control component, such as a second solenoid valve, a second flow meter, etc., may be arranged on the at least one waste liquid processing pipeline. The fourth control component may control the processing flow of the waste liquid by controlling the second solenoid valve or the second flow meter.

### Embodiment 1

Distilled water may be used to prepare reactants, the reactants including 1 mol/L zinc sulfate solution, 2mol/L sodium hydroxide solution, 0.01 mol/L sodium oleate solution and 0.005mol/L sodium citrate solution. Start the multiphase interface reactor to make the reactants flow into the multiphase interface reactor at a flow rate of 300mL/min, and make the at least one layer of stirring disk stir at a speed of 4000r/min, so that the reactants start to react. The at least one layer of stirring disk may be a self- priming stirring disk. In the reaction process, a reaction pH may be detected through a pH detection port, and the pH may be maintained at 10. After the reaction, zinc hydroxide foam slurry may be generated. Leave the zinc hydroxide foam slurry for 2 hours, and then wash it with distilled water to obtain zinc hydroxide filter cake. Put the zinc hydroxide filter cake into an air blast drying box, and dry it at 60 °C for 24 hours to obtain zinc hydroxide powder. Put the zinc hydroxide powder into a muffle furnace, the temperature rise rate of the muffle furnace may be 2 °C/min, the temperature may be raised to 400 °C and kept for 3 hours to obtain zinc oxide nanoparticles.

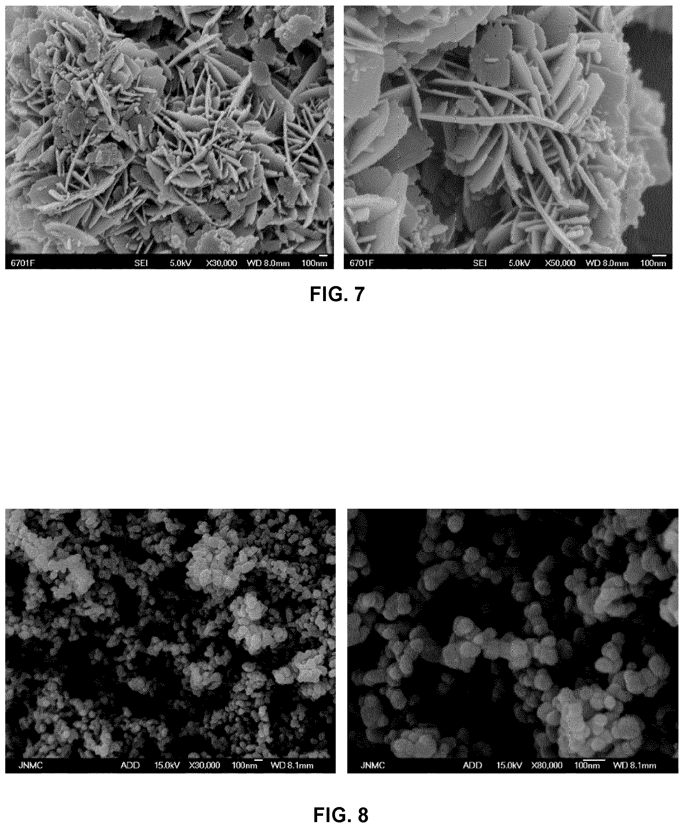

A purity of the zinc oxide nanoparticles prepared according to Embodiment 1 is 98%. FIG. 7 is a scanning electron microscope diagram of the zinc oxide nanoparticles prepared according to the Embodiment 1. It can be seen from FIG. 7 that the zinc oxide nanoparticles are flakes, with uniform particle size distribution and good monodispersity. After measurement, thicknesses of the zinc oxide nanoparticles are 40- 50nm.

### Embodiment 2

Distilled water may be used to prepare reactants, the reactants including 0.8mol/L zinc sulfate solution, 1 mol/L sodium carbonate solution, 0.008mol/L sodium oleate solution and 0.004mol/L sodium citrate solution. Start the multiphase interface reactor to make the reactants flow into the multiphase interface reactor at a flow rate of 300mL/min, and make the at least one layer of stirring disk stir at a speed of 4000r/min, so that the reactants start to react. The at least one layer of stirring disk may be a self- priming stirring disk. In the reaction process, the reaction pH may be detected through the pH detection port, and the pH is maintained at 9. After the reaction, generate *ZnCO*₃ · 3*Zn*(*OH*)₂ foam slurry. Set the *ZnCO*₃ · 3*Zn*(*OH*)₂ foam slurry to stand for 2 hours, and then wash it with distilled water to obtain *ZnCO*₃ · 3*Zn*(*OH*)₂ filter cake. Put the *ZnCO*₃ · 3*Zn*(*OH*)₂ filter cake into an air blast drying oven, dry it at 60 °C for 24 hours to obtain *ZnCO*₃ · 3*Zn*(*OH*)₂ powder. Put the *ZnCO*₃ · 3*Zn*(*OH*)₂ powder into a muffle furnace. A temperature rise rate of the muffle furnace may be 2 °C/min, and the temperature may be raised to 600 °C and kept for 3 hours to obtain zinc oxide nanoparticles.

A purity of the zinc oxide nanoparticles prepared according to Embodiment 2 is 98%. FIG. 8 is a scanning electron microscope diagram of zinc oxide nanoparticles prepared according to the Embodiment 2. It can be seen from FIG. 8 that zinc oxide nanoparticles are nearly spherical, with uniform particle size distribution and good monodispersity. After measurement, diameters of the zinc oxide nanoparticles are 50- 70 nm.

### Embodiment 3

Distilled water may be used to prepare reactants, the reactants including copper sulfate solution with a concentration of 0.4mol/L, sodium carbonate solution with a concentration of 0.6mol/L, sodium oleate solution with a concentration of 0.004mol/L and sodium citrate solution with a concentration of 0.002mol/L. Start the multiphase interface reactor to make the reactants flow into the multiphase interface reactor at a flow rate of 300mL/min, and make the at least one layer of stirring disk stir at a speed of 4000r/min, so that the reactants start to react. The at least one layer of stirring disk may be a self- priming stirring disk. In the reaction process, the reaction pH may be detected through the pH detection port, and the pH may be maintained at 9. After the reaction, generate *Cu*₂(*OH*)₂*CO*₃ foam slurry. Set the *Cu*₂(*OH*)₂*CO*₃ foam slurry to stand for 2 hours, and then wash it with distilled water to obtain *Cu*₂(*OH*)₂*CO*₃ filter cake. Put the *Cu*₂(*OH*)₂*CO*₃ filter cake into an air blast drying oven, dry it at 60 °C for 24 hours to obtain *Cu*₂(*OH*)₂*CO*₃ powder. Put the *Cu*₂(*OH*)₂*CO*₃ powder into a muffle furnace. A temperature rise rate of the muffle furnace may be 2 °C/min, the temperature may be raised to 600 °C and kept for 3 hours to obtain copper oxide nanoparticles.

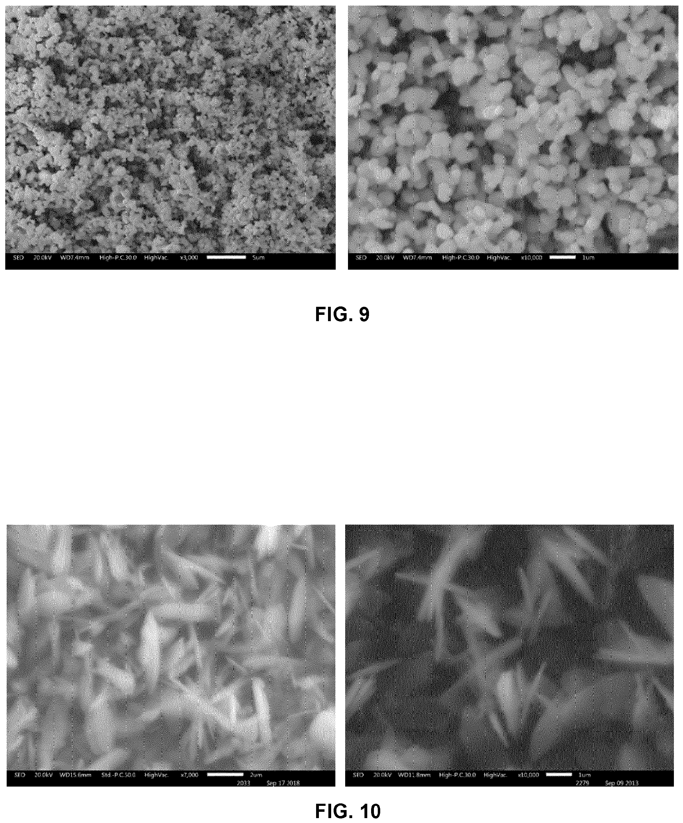

A purity of the copper oxide nanoparticles prepared according to Embodiment 3 is 98%. FIG. 9 is a scanning electron microscope diagram of copper oxide nanoparticles prepared according to the Embodiment 3. It can be seen from FIG. 9 that the copper oxide nanoparticles are nearly spherical, with uniform particle size distribution and good monodispersity. After measurement, diameters of the copper oxide nanoparticles are 300 nm.

### Embodiment 4

Distilled water may be used to prepare reactants, the reactants including ferrous sulfate solution 1mol/L, 1g/L ascorbic acid solution, 0.67mol/L phosphoric acid solution, 2mol/L sodium hydroxide solution, 0.018mol/L sodium oleate solution and 0.009mol/L mixed solution of sodium citrate solution. Start the multiphase interface reactor to make the reactants flow into the multiphase interface reactor at a rate of 300mL/min, make high- purity nitrogen (purity greater than 99.99%) flow into the multiphase interface reactor at a rate of 0.2mL/min, and make the at least one layer of stirring disk stir at a rate of 4000r/min, and the reactants start to react. In the reaction process, a reaction pH may be detected through a pH detection port, and the pH may be maintained at 10. After reaction, generate *Fe*₃(*PO*₄)₂ · 8*H*₂*O* foam slurry. Set the *Fe*₃(*PO*₄)₂ · 8*H*₂*O* foam slurry to stand for 0.5 hours, and then wash it with distilled water to obtain *Fe*₃(*PO*₄)₂ · 8*H*₂*O* filter cake. Put the *Fe*₃(*PO*₄)₂ · 8*H*₂*O* filter cake into an air blast drying box and dry it at 60 °C for 12 hours to obtain ferrous phosphate nanoparticles.

A purity of the ferrous phosphate nanoparticles prepared according to Embodiment 4 is 98%. FIG. 10 is a scanning electron microscope diagram of ferrous sulfate nanoparticles prepared according to the Embodiment 4. It can be seen from FIG. 10 that the ferrous phosphate nanoparticles are in sheet shape, with uniform particle size distribution and good monodispersity. Thicknesses of the ferrous phosphate nanoparticles was measured to be 100 nm.

It should be noted that dimensions of the components of the reactor 100 in the present disclosure (for example, the first cylinder 110, the second cylinder 120, the reaction cylinder 130, and the stirring device 140) and values of positional relationships between the components are only examples, and do not constitute any limitation in the present disclosure. Those skilled in the art may make various improvements to the above values, such as reducing or enlarging the above values in an equal or approximately equal proportion. Such improvements still belong to the spirit and scope of the exemplary embodiments of the present disclosure.

The possible beneficial effects of the embodiments of the present disclosure include but are not limited to the followings: (1) the size of the transmission device in the stirring device of the present disclosure in depth into the coupling device may be adjustable, so that the at least one layer of the stirring sheet may go up and down, and the distance from at least one layer of the stirring sheet to the upper cylinder cover of the reaction cylinder and/or the lower bottom of the reaction cylinder may be adjustable, thereby controlling a nano reaction process to improve the purity of nanoparticles; (2) the dosing device of the present disclosure may control the dosing and feeding process to ensure the uniformity of the gas- liquid mixture entering the reaction cylinder, so as to further ensure the uniformity of the generated nanoparticles; (3) the washing device of the present disclosure may clean the reactor, and may formulate different cleaning schemes based on different reactions. It should be noted that different embodiments may have different beneficial effects. In different embodiments, the beneficial effects may be any one or a combination of the above, or any other beneficial effects that may be obtained.

The basic concepts have been described above. Obviously, for those skilled in the art, the above detailed disclosure is only an example and does not constitute a limitation of the present disclosure. Although it is not explicitly stated here, those skilled in the art may make various modifications, improvements, and amendments to the present disclosure. Such modifications, improvements and amendments are suggested in the present disclosure, so such modifications, improvements and amendments still belong to the spirit and scope of the exemplary embodiments of the present disclosure.

Meanwhile, the present disclosure uses specific words to describe the embodiments of the present disclosure. For example, "one embodiment", and/or "some embodiments" mean a certain feature or structure related to at least one embodiment of the present disclosure. Therefore, it should be emphasized and noted that "one embodiment" or "an alternative embodiment" mentioned twice or more in different positions in the present disclosure does not necessarily refer to the same embodiment. In addition, certain features or structures in one or more embodiments of the present disclosure may be appropriately combined.

Similarly, it should be noted that, in order to simplify the description disclosed in the present disclosure and thus help the understanding of one or more embodiments of the invention, the foregoing description of the embodiments of the present disclosure sometimes incorporates a variety of features into one embodiment, the drawings or the description thereof. However, this disclosure method does not mean that the object of the present disclosure requires more features than those mentioned in the claims. In fact, the features of the embodiments are less than all the features of the single embodiments disclosed above.

In some embodiments, numbers describing the number of components and attributes are used. It should be understood that such numbers used in the description of embodiments are modified by the modifier "about", "approximate" or "generally" in some examples. Unless otherwise stated, "approximately" or "generally" indicate that a ±20% change in the FIG. is allowed. Accordingly, in some embodiments, the numerical parameters used in the description and claims are approximate values, and the approximate values may be changed according to the characteristics required by individual embodiments. In some embodiments, the numerical parameter should consider the specified significant digits and adopt the method of general digit reservation. Although the numerical fields and parameters used to confirm the range breadth in some embodiments of the present disclosure are approximate values, in specific embodiments, the setting of such values is as accurate as possible within the feasible range.

For each patent, patent application, patent application disclosure and other materials cited in the present disclosure, such as articles, books, specifications, publications, documents, etc., the entire contents are hereby incorporated into the present disclosure for reference. Except for the present disclosure history documents that are inconsistent with or conflict with the contents of the present disclosure, and the documents that limit the widest range of claims in the present disclosure (currently or later appended to the present disclosure). It should be noted that in case of any inconsistency or conflict between the description, definitions, and/or use of terms in the supplementary materials of the present disclosure and the contents described in the present disclosure, the description, definitions, and/or use of terms in the present disclosure shall prevail.

Finally, it should be understood that the embodiments described in the present disclosure are only used to illustrate the principles of the embodiments of the present disclosure. Other deformations may also fall within the scope of the present disclosure. Therefore, as an example rather than a limitation, the alternative configuration of the embodiments of the present disclosure may be regarded as consistent with the teachings of the present disclosure. Accordingly, the embodiments of the present disclosure are not limited to those explicitly introduced and described in the present disclosure.

## Claims

1. A multiphase interface reactor, comprising:
a reaction cylinder;
at least one feed port opened in the reaction cylinder;
a stirring device, at least a part of the stirring device being located inside the reaction cylinder;
at least one cylinder including a first cylinder and a second cylinder, wherein,
the reaction cylinder, the first cylinder, and the second cylinder communicate with each other;
an annular space is formed between the reaction cylinder and the second cylinder, so that at least a part of a reaction product is allowed to enter the annular space from the reaction cylinder, and enter the first cylinder from the annular space; and
at least one discharge port arranged on the first cylinder.

2. The reactor of claim 1, wherein
the reaction cylinder communicates with the second cylinder through a lower bottom surface of the reaction cylinder;
an inner surface of a cylinder wall of the second cylinder and an outer surface of a cylinder wall of the reaction cylinder form the annulus space; and
the second cylinder communicates with the first cylinder through an upper surface of the second cylinder.

3. The reactor of claim 2, wherein a distance between the lower bottom surface of the reaction cylinder and a lower cylinder cover of the second cylinder is 40-80 mm.

4. The reactor of claim 2 or claim 3, wherein a distance between the lower bottom surface of the reaction cylinder and a lower cylinder cover of the second cylinder is 50-75 mm.

5. The reactor of any one of claims 2 to 4, wherein a distance between the lower bottom surface of the reaction cylinder and a lower cylinder cover of the second cylinder is 54-69 mm.

6. The reactor of any one of claims 1 to 5, wherein a height of the reaction cylinder is 70-120 mm.

7. The reactor of any one of claims 1 to 6, wherein a height of the reaction cylinder is 90-100mm.

8. The reactor of any one of claims 1 to 7, wherein
a diameter of the first cylinder is 100-150 mm; and
a height of the first cylinder is 80-120 mm.

9. The reactor of any one of claims 1 to 8, wherein
a diameter of the first cylinder is 110-140 mm; and
a height of the first cylinder is 90-110 mm.

10. The reactor of any one of claims 1 to 9, wherein
a diameter of the first cylinder is 126 mm; and
a height of the first cylinder is 99 mm.

11. The reactor of any one of claims 1 to 10, wherein the stirring device includes:
a first power component;
at least one stirring sheet; and
a transmission device, wherein the transmission device is configured to drive, based on driving of the first power component, the at least one stirring sheet to move.

12. The reactor of claim 11, wherein the stirring device further includes:
a coupling device configured to connect the first power component and the transmission device.

13. The reactor of claim 11 or claim 12, wherein the at least one stirring sheet includes at least one stirring disk.

14. The reactor of claim 13, wherein
a distance between an outer circumference of the at least one stirring disk and an inner surface of a cylinder wall of the reaction cylinder is 4-7 mm; and
a distance from the at least one stirring disk to a lower bottom surface of the reaction cylinder is 70-90 mm.

15. The reactor of claim 13 or claim 14, wherein
a distance between an outer circumference of the at least one stirring disk and an inner surface of a cylinder wall of the reaction cylinder is 5-6 mm; and
a distance from the at least one stirring disk to a lower bottom surface of the reaction cylinder is 75-80 mm.

16. The reactor of any one of claims 13 to 15, wherein
a distance between an outer circumference of the at least one stirring disk and an inner surface of a cylinder wall of the reaction cylinder is 5.5 mm; and
a distance between the at least one stirring disk and a lower bottom surface of the reaction cylinder is 78.5 mm.

17. The reactor of claim 13, wherein the at least one stirring disk includes:
at least one bubble cap; and
at least one opening having one-to-one correspondence to the at least one bubble cap, each of the at least one opening being located below the corresponding bubble cap.

18. The reactor of claim 17, wherein a count of the at least one bubble cap is 10.

19. The reactor of claim 17 or claim 18, wherein the at least one bubble cap includes a quarter hollow sphere.

20. The reactor of any one of claims 1 to 19, further comprising a dosing device, wherein the dosing device includes:
at least one storage tank;
at least one feed pipe configured to connect the at least one feed port and the at least one storage tank; and
at least one second power component configured to provide power for transporting reactants from the at least one storage tank to the reaction cylinder.

21. The reactor of claim 20, wherein the dosing device further includes:
a second control component configured to control a ratio and/or a feeding sequence of the reactants.

22. The reactor of claim 20 or claim 21, wherein the at least one storage tank includes:
a dosing tank configured to pretreat at least part of the reactants and store the pretreated reactants.

23. The reactor of any one of claims 20 to 22, wherein the at least one second power component includes a metering pump.

24. The reactor of any one of claims 20 to 23, wherein a distance between the at least one second power component and the at least one storage tank is smaller than a distance between the at least one second power component and the reaction cylinder.

25. The reactor of any one of claims 1 to 24, further comprising a washing device, wherein
the first cylinder is provided with at least one first cleaning port configured to connect the washing device; and/or
the second cylinder is provided with at least one second cleaning port configured to connect the washing device.

26. The reactor of claim 25, wherein the washing device includes:
a liquid supply module configured to supply a cleaning liquid; and
a waste liquid collection module configured to collect a waste liquid.

27. The reactor of claim 26, wherein the liquid supply module includes:
a storage tank configured to store the cleaning liquid;
a liquid supply pipe configured to connect the storage tank with the at least one first cleaning port and/or the at least one second cleaning port; and
a third power component configured to provide power to transport the cleaning liquid from the storage tank to the at least one first cleaning port and/or the at least one second cleaning port.

28. The reactor of claim 26 or claim 27, wherein the liquid supply module further includes a third control component configured to control a supply flow rate of the cleaning liquid.

29. The reactor of any one of claims 26 to 28, wherein the waste liquid collection module includes:
at least one waste liquid collection tank; and
at least one waste liquid pipe configured to connect the at least one waste liquid collection tank and at least one waste liquid collection port, wherein the at least one waste liquid collection port is arranged on the second cylinder.
